# EUROPEAN PATENT APPLICATION

(11) **EP 3 827 650 A1**
(43) Date of publication of application: **02.06.2021**
(21) Application number: 19212653.0
(22) Date of filing: 29.11.2019
(51) Int. Cl.: A01B 15/14, A01B 23/04

(54) **FRAME FOR AGRICULTURAL IMPLEMENTS**

(71) Applicant: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: CNH Industrial IP Department

(57) **Abstract**

The present disclosure relates to a main frame (700) for an agricultural implement, the main frame (700) being able to support a plurality of ground engaging tools and extending between a first end (702) that is connectable to an agricultural work vehicle and an opposite, second end (704), wherein the main frame (700) defines at least one cavity (701) extending at least partly between the first and second end of the main frame (700) for accommodating hydraulic and/or electric lines, and wherein the main frame (700) comprises at least one aperture providing access to the cavity from outside of the main frame (700).

## Description

### Background of the Invention

The present disclosure relates to a frame for an agricultural implement, particularly, but not exclusively, to a frame for an agricultural plough. Other aspects relate to an agricultural implement comprising the frame and an agricultural machinery comprising the agricultural implement connected to a tractor.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective alternatives of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Ploughs typically include a plurality of plough bodies connected to a plough frame in a laterally offset manner. Each plough body is connected to the plough frame (or main frame) via corresponding beams. The plough frame, in turn, is connected to a towing or pushing vehicle via a headstock arranged at a front or back end of the frame.

Most modern ploughs are of the reversible type, in which the main frame of the plough is rotatable by 180 degrees (reversed) with respect to the headstock. A turning cylinder attached to the headstock may be used to rotate (reverse) the plough. Before rotating the plough, the main frame is lifted by a towing vehicle that is connected to the headstock end of the frame. The reversal process may commence once the main frame is lifted sufficiently high that all of the plough bodies are elevated above the ground. During rotation of the so elevated main frame, a first set of plough bodies, which is initially arranged below the main frame (first configuration), is transferred to the top of the main frame. At the same time, a second set of plough bodies, which is initially arranged on top of the main frame, is then transferred to a position below the main frame. The reversible plough is then in its second configuration. This process works both ways, such that the main frame may also be rotated back to its first configuration. Whenever the plough is reversed, the first and the second set of plough bodies swap position.

In both configurations, plough the plough bodies may be biased into the ground by hydraulic actuators connected to a hydraulic accumulator and/or a hydraulic fluid supply of the agricultural work vehicle. As a consequence, numerous hydraulic fluid lines may extend along the length of the plough implement to connect the various hydraulic actuators with hydraulic fluid from the agricultural work vehicle. Similarly, ever increasing automation of agricultural ploughs might require wired electrical connections between the agricultural work vehicle and the plough implement. High numbers of hydraulic lines and electrical wires may cause packaging space issues. Furthermore, the fluid lines and the electrical wires may be subject to adverse weather conditions that can significantly reduce the service life of the plough.

In view of the aforementioned problem, there is a need for improved ploughs, particularly plough frames.

It is an aim of the present disclosure to solve or at least ameliorate one or more problems of the prior art.

### Summary of the Invention

Aspects and embodiments of the disclosure provide an agricultural implement and an agricultural machinery as claimed in the appended claims.

According to a first aspect of the present disclosure, there is provided a main frame for an agricultural implement, the main frame being able to support a plurality of ground engaging tools and extending between a first end that is connectable to an agricultural work vehicle and an opposite, second end, wherein the main frame defines at least one cavity extending at least partly between the first and second end of the main frame for accommodating hydraulic and/or electric lines, and wherein the main frame comprises at least one aperture providing access to the cavity from outside of the main frame.

According to an embodiment, the at least one cavity is for accommodating hydraulic and/or electric lines that extend in a longitudinal dimension of the main frame.

The at least one aperture may provide access for performing maintenance tasks in the at least one cavity from outside of the main frame. In particular, the at least one aperture may facilitate maintenance works on any device or objected housed within the cavity of the main frame.

The at least one aperture may extend partly or fully along the length of the main frame.

In another embodiment, the at least one aperture extends partly along the length of the main frame, e.g.:
i) less than 75%, 50% or 30% of the length of the main frame,
ii) more than 3%, 5% or 7.5% of the length of the main frame,
iii) between 3% and 30% of the length of the main frame,
iv) at least 0.15 metres, 0.2 metres, or 0.4 metres,
v) less than 2 metres, 1 metre, or 0.5 metres,
vi) between 0.15 metres and 0.4 metres.

In yet another embodiment, the main frame comprises first and second walls defining parts of the cavity, and wherein the at least one aperture is an opening extending through the first or second wall of the main frame.

The opening may be arranged at the first end of the main frame.

The main frame may comprise a plurality of reinforcement members extending between the first and second walls.

The reinforcement members may extend between opposing side edges of the first and second wall, and the at least one aperture of the main frame may be a void between adjacent reinforcement members.

The main frame may comprise at least one removable cover for covering the at least one aperture of the main frame.

According to another embodiment, the main frame has:
an I-shaped cross-section;
a U-shaped cross-section; or
a rectangular cross-section.

The cavity may house one or more cable or duct mounts.

According to another aspect of the present disclosure, there is provided an agricultural implement comprising any of the above main frames and a plurality of ground engaging tools connected to the main frame.

In one embodiment, the agricultural implement may be a plough, for example a reversible plough, comprising one or more plough bodies connected to the main frame.

According to yet another aspect of the present disclosure, there is provided an agricultural machinery comprising an agricultural work vehicle and the above agricultural implement.

The agricultural work vehicle may include one or more control devices, such as but not limited to programmable or non-programmable processors. Similarly, the agricultural implement may include one or more control devices, such as but not limited to programmable or non-programmable processors. Additionally, or alternatively, the agricultural implement may be controlled by one or more control devices of the agricultural work vehicle. Similarly, the agricultural work vehicle may be controlled by one or more control devices of the agricultural implement.

The agricultural work vehicle and/or the agricultural implement may be remote controlled, e.g. from a farm office. Accordingly, the agricultural work vehicle may include one or more communication interfaces for connection to a remote processor and/or a remote controller. Similarly, the agricultural implement may include one or more communication interfaces for connection to a remote processor and/or a remote controller.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figures 1A to 1C show various views of an agricultural plough;
Figure 2 shows a schematic view of an agricultural machinery in a working field;
Figures 3A to 3F show schematic cross-sections of main frames according to various embodiments of the present disclosure;
Figures 4A to 4E show perspective views of main frame according to various embodiments of the present disclosure;

### Detailed Description of the Drawings

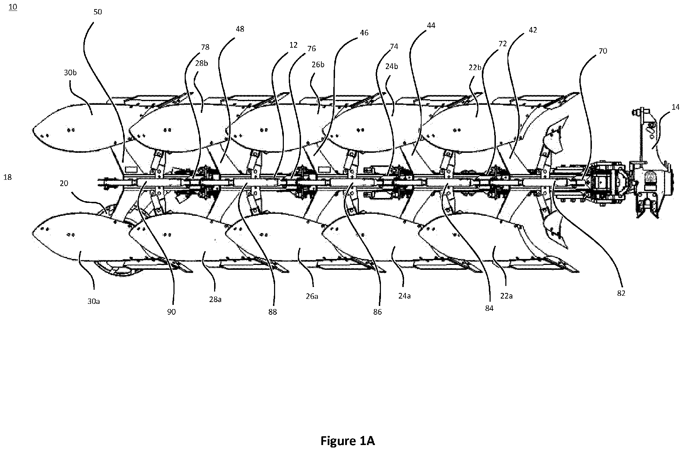

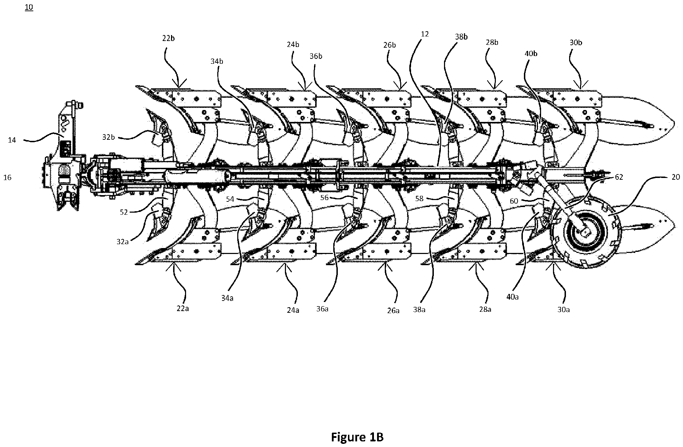

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 extends between a headstock 14 at a first, front end 16 of the plough towards a second, rear end 18 of the plough. The main frame 12 supports a variety of ground-engaging tools. In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b are connected to the main frame 12 by means of beams 42, 44, 46, 48, 50. Each of the beams 42, 44, 46, 48, 50 has a substantially Y-shaped structure to support pairs of plough bodies.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the beams 42, 44, 46, 48, and 50 of the plough 10 shown in Figures 1A to 1C includes a hydraulic stone-trip mechanism. To this end, each of the Y-shaped beams 42, 44, 46, 48, 50 is pivotable with respect to the main frame 12 about pivots of a corresponding beam housing 70, 72, 74, 76, 78, such that each of the beams 42 to 50 can pivot their respective plough bodies 22a, 22b, 24a, 24b, 26a, 26b, 28a, 28b, 30a, 30b out of the soil, when the latter hits a subterranean obstacle, such as a stone buried in the soil. To avoid pivotal movement of the beams 42, 44, 46, 48, 50 and thus also a withdrawal of the corresponding plough bodies 22a to 30b from the soil during normal operation, i.e. when no subterranean obstacle is encountered, the beams are biased into a working position (horizontal position shown in Figure 1A) by means of hydraulic actuators 82, 84, 86, 88, and 90. Depending on the hydraulic pressure within hydraulic actuators 82 to 90, a bias-force is applied to the beams 42 to 50 biasing the beams into their working position (horizontal position in Figure 1A). A pivotal movement of the beams 42 to 50 is only possible if the bias-force of the hydraulic actuators 82 to 90 is overcome by a drag-force experienced by the plough bodies 22a to 30b working the soil. The bias-force of the hydraulic actuators 82 to 90 is adjusted such that the drag-force experienced by the plough bodies 22a to 30b is only overcome if significant obstacles are encountered.

Each of the hydraulic actuators 82 to 90 may be connected to an individual accumulator. Alternatively, or additionally, the hydraulic actuators 82 to 90 may be connected to a common hydraulic accumulator.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough 10 through a field creates five adjacent furrows.

Skimmers 32a, 32b, 34a, 34b, 36a, 36b, 38a, 38b, 40a, 40b are attached in front of the plough bodies 22a, 22b, 24a, 24b, 26a, 26b, 28a, 28b, 30a, 30b. A first pair of skimmers 32a, 32b is arranged in front the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b to not penetrate the soil as far as the plough bodies. It follows that the skimmers 32a, 32b, 34a, 34b, 36a, 36b, 38a, 38b, 40a, 40b are configured to only lift a top layer off the ground surface before the soil is turned over by the plough body that is arranged immediately behind the skimmer.

Each pair of skimmers 32a, 32b, 34a, 34b, 36a, 36b, 38a, 38b, 40a, 40b is attached to the main frame 12 by means of a corresponding mounting assembly 52, 54, 56, 58, 60.

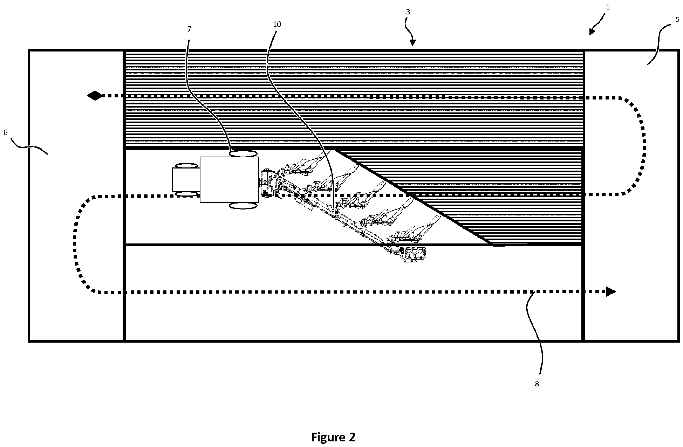

Turning to Figure 2, a typical operation of agricultural machinery comprising a tractor 7 and a plough 10 is described. In use, the plough 10 is drawn as an attachment (implement) behind a towing vehicle (e.g. tractor 7). It will be appreciated that it is equivalently feasible to locate the plough 10 in front or both in front and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor, when the plough is in its transfer position (on the headlands). In other words, the plough is then exclusively supported by the tractor 7 via headstock 14 and maybe lifted off the ground with a lift cylinder of a tractor linkage.

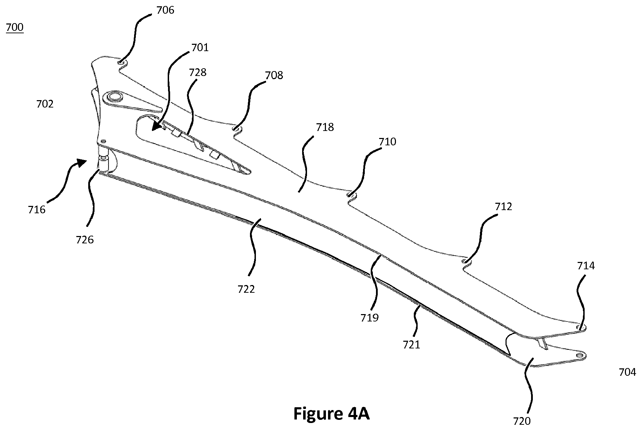

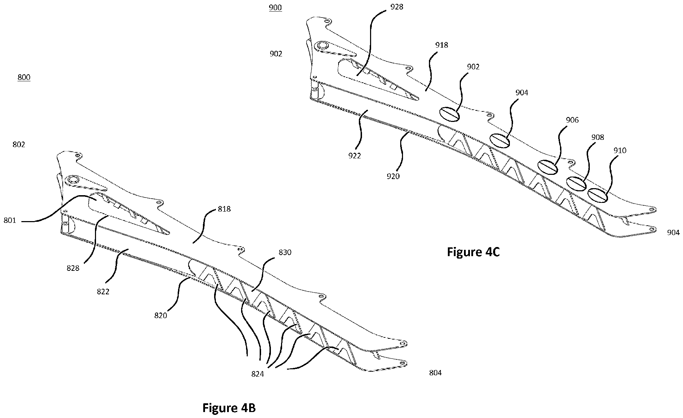

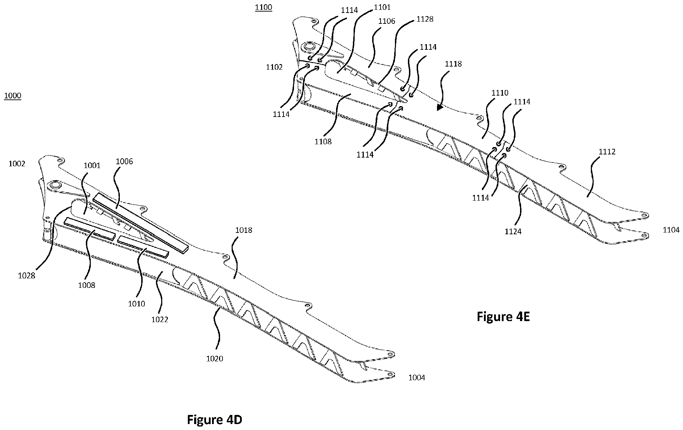

During the turning movement on the headlands, the plough 10 is also reversed. That is, the main frame 12 is rotated by about 180 degrees with respect to the headstock 14 to move the plough from a first configuration to a second configuration. It will be appreciated that if the operator is ploughing in the furrow (as shown in Figure 4), then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees.

In its first configuration shown in Figures 1A to 1C, the plough 10 is set up such that a first plurality of ground engaging tools, such as plough bodies 22a, 24a, 26a, 28a, and 30a, are in contact with the soil. In its second configuration (not illustrated), the plough 10 is set up such that a second plurality of ground engaging tool, such as plough bodies 22b, 24b, 26b, 28b, and 30b, are in contact with the soil.

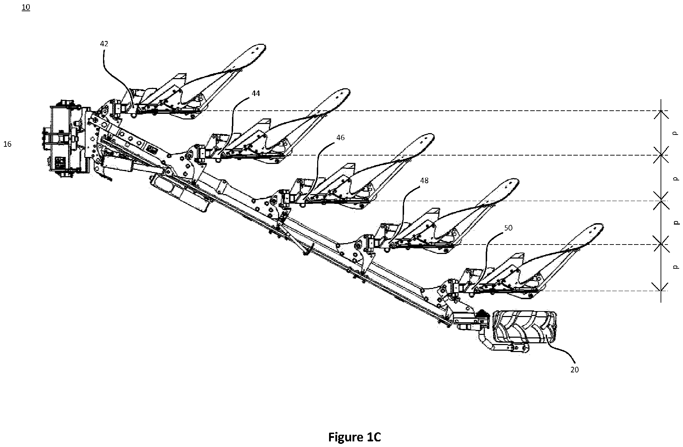

Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the main frame 12 is rotated by 180 degrees (reversed) with respect to the headstock 14. A turning cylinder (not shown), attached to the headstock 14 is typically used to rotate (reverse) the plough 10. During rotation of the main frame, the first set of plough bodies, e.g. 22a, 24a, 26a, 28a, 30a, are transferred to the top of the plough 10. At the same time, the second set of plough bodies e.g. 22b, 24b, 26b, 28b, 30b, that were not in use in the previous run is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough 10 between consecutive runs has the advantage that the plough bodies 22a, 22b, 24a, 24b, 26a, 26b, 28a, 28b, 30a, 30b that engage the soil always face the same end of the field, irrespective of the tractor's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50 or rails 52, 54, 56, 58, 60, there is no possibility of adjusting the working depth of said ground engaging tools without changing the ground clearance of the main frame 12. To this end, the plough 10 shown in Figures 1A to 1C includes implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If the main frame 12 is lifted, by extending the linkage 62 between implement wheel 20 and the main frame 12, then the working depth of the plurality of first ground engaging tools is decreased, i.e. the plurality of first ground engagement tools are either raised or completely pulled out of the soil. It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders connected to lifting arms of the agricultural work vehicle that carry the headstock 14.

It will be appreciated that agricultural implements like the plough 10 in Figures 1A to 1C include a number of hydraulic lines connecting a hydraulic pump of the agricultural work vehicle to the numerous hydraulic actuators, such as the hydraulic actuators of linkage 62 and headstock 14 or the hydraulic actuators 82, 84, 86, 88, 90 of beams 42, 44, 46, 48, and 50, of the plough 10. In some variations of the plough implement, the hydraulic fluid lines connecting the various hydraulic components may be arranged freely between the hydraulic actuators and the pump of the agricultural work vehicle, that is outside of the main frame 12 and the plough beams 42, 44, 46, 48, and 50. Hydraulic lines connected to the outside of the plough frame are subject to increased wear and therefore can decrease the service life of the plough implement.

Arranging the hydraulic lines inside the main frame 12 of the agricultural plough 10 has the disadvantage that the hydraulic lines are not accessible or at least only accessible with great difficulty, thereby complicating maintenance works on the plough implement. Examples of the present disclosure address one or more of these problems by providing a more accessible, hollow main frame that can be used to house hydraulic and/or electric lines and protect them from adverse environmental conditions.

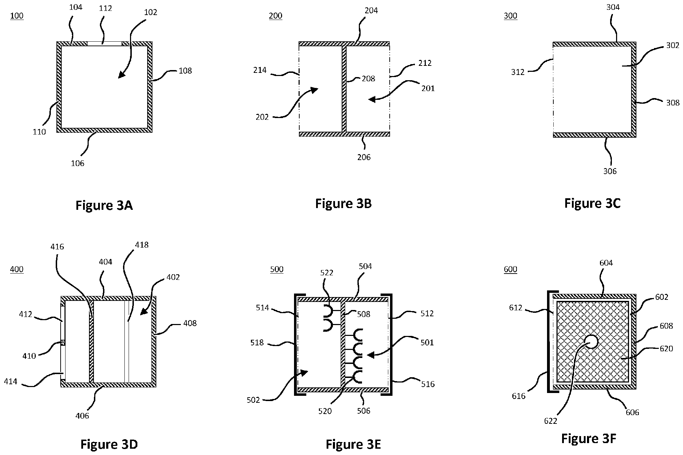

Figures 3A to 3F show schematic cross-sections of various embodiments of main frames according to the present disclosure. A first embodiment of a main frame 100 is shown in a schematic cross-section in Figure 3A. The main frame 100 of the first embodiment has a substantially rectangular shape and defines a cavity 102 extending between the first and second ends (not shown) of the main frame 100. The cavity defined by the main frame 100 may be sized and shaped to receive or accommodate a number of hydraulic and /or electrical lines that connect the various actuators and sensors of the plough implement with corresponding supply and control systems of the agricultural machinery. It should be noted that the cavity may only extend along parts of the length of the main frame 100 between its first and second end.

The cavity 102 can be for accommodating hydraulic and/or electric lines that extend in a longitudinal dimension of the main frame. That is, in a dimension that is between a first end and a second end of the main frame 100.

The cavity 102, of Figure 3A, is enclosed by four walls 104, 106, 108, 110. As illustrated, a first wall 104 of the main frame 100 is arranged opposite to and in parallel with a second wall 106. The first and second walls 104, 106 of the main frame 100 are connected by perpendicular third and fourth walls 108, 110. A third wall 108 extends between first side edges of the first and second walls 104, 106. A fourth wall 110 of the main frame 100 extends between second side edges of the first and second walls 104, 106 that are opposite to the first side edges connected by the third wall 108.

A first aperture in a side wall of the main frame allows access to the cavity 102 from the outside of the main frame 100. In the embodiment of Figure 3A, the first aperture is an opening 112 extending through the first wall 104 of the main frame 100. Of course, it will be understood that the opening 112 may equivalently extend through one or more of the remaining walls 106, 108, or 110. Moreover, the main frame 100 may also comprise a plurality of openings extending through one or more of the walls 104, 106, 108, 110.

Advantageously, the apertures/openings provide access for performing maintenance tasks in the at least one cavity from outside of the main frame. In one example, such maintenance tasks may include hydraulic maintenance, such as tightening of joints and fittings, checking for wear and leakage, adjusting and checking valves, accumulators, cylinders, and other hydraulic devices arranged within the main frame 100. Other examples may include electronic maintenance, such as checking electric cables and connections and/or checking and adjusting/updating a control unit. In another example, the maintenance tasks performed via the aperture/opening may include greasing maintenance, such as repairing or refilling a (automatic) greasing system that is arranged within the main frame 100.

The aperture / opening may extend partly or fully along the length of the main frame 100. For instance, the aperture / opening may extend less than 75%, less than 50%, or less than 30% of the length of the main frame 700. In another example, the aperture / opening may extend more than 3%, more than 5% or more than 7.5% of the length of the main frame 700. In another embodiment, the aperture / opening may extend between 3% and 30% of the length of the main frame 700. In yet another example, the aperture / opening may extend at least 0.15 metres, at least 0.2 metres, or at least 0.4 metres. In some embodiments, the aperture / opening may extend less than 2 metres, less than 1 metre, or less than 0.5 metres. In one example the aperture / opening may extend between 0.15 metres and 0.4 metres.

In the embodiment of Figure 3A, the opening 112 is a cut out extending through the first wall 104 partly along the length of the main frame between its first and second end. However, it is equivalently feasible to create an opening (not shown) that extends all the way between the first and second ends of the main frame along any of the walls 104, 106, 108, 110.

In the illustration of Figure 3A, the first wall 104 may be an upper wall of the main frame 100 in its first configuration. It follows that the second wall 106 is a lower wall in the first configuration of the main frame 100. The third and fourth wall 108, 110 are side walls of the main frame 100.

If the apertures, such as the opening 112, are arranged on both the first and second walls 104, 106, it may be preferable to offset these openings in the longitudinal direction of the main frame 100 to allow access to the cavity 102 from the outside of the frame from both sides of the main frame 100 without affecting the structural integrity of the main frame 100 significantly.

Turning to Figure 3B, there is shown another embodiment of the main frame of the present disclosure. Figure 3B illustrates the main frame 200 in a schematic cross-section. The main frame 200 of the embodiment shown in Figure 3B has a substantially I-beam shaped cross-section. The main frame 200 of this embodiment has a first wall 204 and a second wall 206. The first and second walls 204, 206 are arranged in parallel on opposite sides of the main frame 200. The first and second walls 204, 206 are connected by a third wall 208. The third wall 208 extends perpendicular to the first and second walls 204, 206. In the illustrated embodiment, the third wall 208 is arranged laterally in the centre of the first and second walls 204, 206.

The third wall 208 divides a space between the first and second walls 204, 206 into two cavities 201, 201. A first cavity 201 extends at least partly along the length of the main frame 200 on a first side of the third wall 208. A second cavity 202 extends at least partly along the length of the main frame 200 on an opposite, second side of the third wall 208.

The first cavity 201 is accessible via a first aperture, such as the first void 212 indicated by the dashed lines in Figure 3B. The second cavity 202 is accessible from the outside of the main frame 200 via a second aperture, such as the second void 214 shown by dashed lines in Figure 3B. The two cavities 201, 202 may be used to house various different hydraulic and electric lines required by the agricultural implement. In one example, one of the two cavities 201, 202 may be used to house electrical wiring, whereas the other of the two cavities 201, 202 is used to house hydraulic lines. In this case, the third wall 208 acts as a physical separation between the hydraulic lines and the electric wires of the plough.

A further embodiment of a main frame according to the present disclosure is shown in Figure 3C in a schematic cross-section. The main frame 300 shown in Figure 3C has a substantially U-shaped cross-section. Accordingly, the main frame 300 includes a first wall 304, which is arranged opposite to a second wall 306. The first and second walls 304, 306 are arranged in parallel and on opposite sides of the main frame 300.

A third wall 308 is arranged perpendicularly to the first and second walls 304, 306. The third wall 308 connects the first and second walls 304, 306 along corresponding side edges. On an opposite side to the third wall 308, the main frame 300 comprises an open end or void 312 defining an aperture for accessing a cavity 302 from the outside of the main frame 300. The cavity 302 is defined by the walls 304, 306, 308 and may extend partly or fully along a longitudinal direction of the main frame 300.

Figure 3D shows another embodiment of the main frame 400 according to the present disclosure. The main frame 400 of Figure 3D has a substantially rectangular cross-section. A first wall 404 is arranged parallel and opposite to a second wall 406. A third wall 408 and a fourth wall 410 connect the first and second walls 404, 406 in a perpendicular direction. The third wall 408 extends between the first and second wall 404, 406 along corresponding side edges of the first and second walls 404, 406. The fourth wall 410 extends between corresponding side edges of the first and second walls 404, 406 at an opposite side to the third wall 408. The first, second, third, and fourth walls 404, 406, 408, 410 define a cavity 402 that extends between a first and a second end of the main frame 400.

Figure 3D illustrates two apertures, such as openings 412, 414 arranged, in this example, on the fourth wall 410. The two openings 412, 414 may, for example, be longitudinal slots extending longitudinally along parts of the fourth wall 410. The openings 412, 414 allow access to the cavity 402 from the outside of the main frame 400, for example, to introduce or service hydraulic lines and/or electric wires that are received within the cavity 402.

Figure 3D further shows schematic reinforcement members 416, 418. As will be appreciated, the reinforcement members 416, 418 may be offset from each other in a longitudinal and/or a lateral direction of the main frame 400. The reinforcement members 416, 418 may be struts extending between the first wall 404 and the second wall 406. Alternatively, the reinforcement members may extend between any other walls or even diagonally across the cavity 402. The reinforcement members 416, 418 may also be interior walls extending partly or fully within the cavity 402, for example in the longitudinal direction of the main frame 400. Accordingly, the reinforcement members may increase the structural integrity of the main frame 400 and, at the same time, act as guide structures for hydraulic lines and/or electric wires received within the cavity 402.

Another embodiment of the main frame is shown in Figure 3E. The main frame 500 of Figure 3E has a substantially I-beam shaped cross-section. The structure of the main frame 500 is generally identical to the structure of the main frame 200 shown in Figure 3B. As such, the main frame 500 comprises a first wall 504 and a second wall 506 connected by a third wall 508 similar to the first to third walls of Figure 3B.

In the embodiment of Figure 3E, the first and second voids 512, 514 are covered by removable covers 516, 518. A first removable cover 516 covers the first void 512. A second removable cover 518 covers the second void 514. The first removable cover 516 may extend along the entire length or partly along the length of the main frame 500 in its longitudinal direction. The first removable cover 516 is arranged to clip on to an outer surface of the first and second walls 504, 506. To this end, the first removable cover 516 may include a tongue-and-groove connector mechanism (not shown) for quick attachment and removal. The second removable cover 518 may extend along the entire length or partly along the length of the main frame 500 in its longitudinal direction. The second removable cover 518 is arranged to clip on to an outer surface of the first and second walls 504, 506. The second removable cover 518 may include a tongue-and-groove connector mechanism (not shown) for quick attachment and removal. Of course, the removable covers 516, 518 may also be arranged to engage with an inner surface of the first and second side walls 504, 506 or may have any other removable connector mechanism.

Figure 3E further schematically illustrates cable or duct holders 520, 522 arranged in the first and second cavities 501, 502. A first set of holders 520 is arranged in the first cavity 501 and connected to a first surface of the third wall 508. A second plurality of holders 522 is arranged in the second cavity 502 on a second surface of the third wall 508 that is opposite to the first surface. The holders 520, 522 may be cable or duct clips or any other mount for cables and ducts that will fit the cavities 501, 502.

Turning to Figure 3F, there is shown another embodiment of a main frame 600 with a substantially U-shaped cross-section. Similar to Figure 3C, the U-shaped main frame 600 of Figure 3F includes a first wall 604 which is arranged opposite and parallel to a second wall 606. The first and second walls 604, 606 are connected via a third wall 608. The third wall 608 is arranged perpendicular to the first and second walls 604, 606 and extends between the first and second walls 604, 606 along corresponding side edges. A cavity 602 is accessible via a void 612 on a side opposite to the third wall 608.

Similar to Figure 3E, the void 612 is covered by a removable cover 616. The removable cover 616 is removably attached to the first and second walls 604, 606. The removable cover may be attached to outer surfaces of the first and second walls 604, 606. Alternatively, the removable cover 616 may be attached to inner surfaces of the first and the second walls 604, 606.

The main frame 600 of Figure 3F also includes an insert 620 that may extend either along the entire longitudinal length of the main frame 600 or parts thereof. The insert 620 includes one or more cavities 622 extending through parts of or the entire insert 620. The cavity 622 is arranged to receive one or more hydraulic ducts and/or electric wires. Of course, the insert 620 may include a plurality of cavities for receiving various ducts or cables. The cavities may extend in various directions within the insert 620. The insert 620 may be a plastic or foam insert that is lightweight and provides insulation of the ducts or wires running through the cavities.

It will be understood that any of the features, such as the reinforcement members, the cable mounts or the insert discussed with reference to Figures 3D through 3F may be utilised in any of the main frames described in this disclosure.

Figure 4A shows a main frame 700 for an agricultural implement, such as the plough 10, according to another embodiment of the present disclosure. The main frame 700 has a first end 702 that may be connected to the headstock 14 of the plough 10, for example, by a linkage arrangement (not shown). The main frame 700 extends from the first end 702 towards an opposite, second end 704. In one example, an implement wheel (not shown) may be attached to the main frame 700 at the second end 704, similar to the implement wheel 20 of Figures 1A to 1C. Although the main frame is depicted as having open ends at the first and second end 702, 704, it will be appreciated that one or both ends of the main frame 700 may equivalently be closed.

A cavity 701 is defined by the main frame 700 and extends between the first end 702 and the second end 704. It should be understood that the cavity may not extend all the way between the first and second ends 702, 704 of the main frame 700. Rather, the cavity 701 may extend along a section of the frame between the first and second ends 702, 704. In other words, the cavity may extend partly or fully along the longitudinal length of the main frame 700.

The main frame 700 comprises a first wall 718 and a second wall 720. In the embodiment of Figure 4A, both walls 718, 720 have substantially the same shape. When in use, the main frame 700 will be connected to the headstock such that the first wall 718 will be an upper wall in the first configuration of the plough, whereas the second wall 720 will be a lower wall in the first configuration. Of course, when the plough is rotated to its second configuration, the second wall 720 will become the upper wall, whereas the first wall 718 will become a lower wall.

The first wall 718 and the second wall 720 are connected by a third wall 722 that extends perpendicular to the first and second walls 718, 720. The third wall 722 connects a first side edge 719 of the first wall 718 with a first side edge 721 of the second wall 720. A fourth wall (not shown) may extend on the other side of the main frame 700, opposite to the third wall 722 and connect the first and second walls 718, 720.

The main frame 700 of Figure 4A further includes a first opening 728 arranged between the first end 702 and second end 704 of the main frame 700. In particular, the first opening 728 is provided in the first wall 718 to create an aperture for granting access to the cavity 701 from the outside of the main frame 700. In the embodiment of Figure 4A, the first opening 728 is a cut-out arranged in the first wall 718. The first opening 718 allows access to the cavity 701 for insertion or removal of hydraulic ducts or electrical wires, or for maintenance work on either of the ducts or wires. The first opening 728 of this embodiment is arranged at the first end 702 of the main frame 700. The first opening 728 extends partly along the length of the main frame 700, e.g. less than 50% of the length, more particularly between 20% and 30% of the length of the main frame 700. A removable cover (not shown) may be provided to cover the first opening 718 when not in use to protect the ducts or wires during operation of the plough.

The main frame 700 comprises five lugs 706, 708, 710, 712, 714. Each of the lugs 706, 708, 710, 712, 714 is capable of supporting one of the beams (as discussed above), which in turn support the plough bodies. In detail, the first lug 706 may be used to attach a first beam. A second lug 708 may be used to attach a second beam. A third lug 710 may be used to attach a third beam. A fourth lug 712 may be used to attach a fourth beam 48. A fifth lug 714 may be used to attach a fifth beam 50. In the embodiment of Figure 4A, the five lugs 706, 708, 710, 712, 714 are equidistantly distributed along the length of the main frame 700 between its first end 702 and its second end 704.

The main frame has a cross-section that changes across the length of the main frame 700 between the first end 702 and second end 704. In the embodiment of Figure 4A, the cross-section of the main frame 700 increases between the first lug 706 and the second lug 708 until it reaches an intermediate point 716 along the length of the main frame 700 at which the cross-section starts to decrease. In this example, the frame has its maximum cross-sectional area at the intermediate point 716. From the intermediate point 716 towards the second end 704, the cross-section of the main frame 700 reduces in size continuously. The stiffness of the main frame 700 may be directly proportional to the size of its cross-section. Accordingly, in the embodiment of Figure 4A, the main frames 700 stiffness increases from the first end 702 towards the intermediate point 716. From the intermediate point 716 towards the second end 704, the stiffness gradually decreases. This design will provide the main frame 700 with increased stiffness between the first and second lugs 706, 708, whereas the stiffness decreases towards the second end 704. This is particularly advantageous, because the bending moments at the front end 702 of the main frame 700 tend to be higher than the bending moments observed at the second end 704 of the main frame 700.

An actuator-attachment-fixture 726 is arranged between the first and second walls 718, 720 at the intermediate point 716. The actuator-attachment-fixture 726 is able to receive one end of an actuator (not shown) that is configured to move the main frame 700, when in use. The actuator may be a hydraulic actuator, more particularly a hydraulic cylinder used to change the angle of the main frame 700 with respect to the headstock 14. Changing the angle of the main frame 700 with respect to the headstock results in an adjustment of the ploughing width. Accordingly, the hydraulic actuator that may be attached to one end to the actuator-attachment-fixture 726 may be a width adjustment actuator.

Referring to Figure 4B, another embodiment of the main frame is shown in a perspective view. The main frame 800 of Figure 4B is similar to the main frame 700 shown in Figure 4A. Parts of the main frame 800 that have an identical function to parts of the main frame 700 are labelled with reference signs increased by 100.

The main frame 800 comprises a first opening 828 extending through the first wall 818 of the main frame 800 and providing access to a cavity 801, similar to main frame 700 of Figure 4A. In contrast to the main frame 700, a third wall 822 of the main frame 800 does not extend along the entire length of the main frame 800. Rather, the third wall 822 extends partially along the length of the main frame 800, between the first and second walls 818, 820.

The main frame 800 comprises a variety of reinforcement members 824. The reinforcement members 824 extend between corresponding side edges of the first and second walls 818, 820 and connect the two. The reinforcement members 824 are substantially V-shaped reinforcement struts connecting the first and second walls 818, 820 along their side edges, in areas that the third wall 822 does not extend to. Voids 830 are provided between adjacent ones of the V-shaped reinforcement members 824. Accordingly, the main frame 800 of Figure 4B includes further apertures (in addition to the first opening 828), in the shape of voids 830 between adjacent reinforcement members 824. The voids 830 allow access to the inside of the frame 800 between the first and second walls 818, 820.

Turning to Figure 4C, there is shown another embodiment of the main frame according to the present disclosure. The main frame 900 of Figure 4C has a similar structure to the main frame 800 of Figure 4B. Parts with a similar or identical functionality are labelled with corresponding reference signs increased by 100. In the embodiment of Figure 4C, in addition to the first opening 928, the main frame 900 of Figure 4C includes a plurality of additional openings 902, 904, 906, 908, 910. The openings 902, 904, 906, 908, 910 provide further access points (apertures) to the cavity 901 of the main frame 900. The additional openings 902, 904, 906, 908, 910 also extend through the first wall 918 of the frame 900. Of course, it is equivalently feasible to add similar openings in the second or the third wall 920, 922 in addition to or instead of openings 902, 904, 906, 908, 910.

As illustrated in Figure 4C, the density of openings 902 to 910 increases towards the second end 904 of main frame 900. As a consequence, the stiffness of the main frame 900 reduces from the first end 902 towards the second end 904, as does the weight due to openings 902 to 910. In other embodiments, the size and/or the density of the openings may vary across the length of the main frame.

Another embodiment of the main frame is illustrated in Figure 4D. The main frame 1000 of Figure 4D is similar to the main frame 800 shown in Figure 4B and features with an identical functionality are labelled with corresponding reference signs increased by 200. In contrast to the main frame 800 of Figure 4B, the main frame 1000 of Figure 4D comprises further reinforcement members 1006, 1008, and 1010. The reinforcement members 1006, 1008, 1010 may be reinforcement strips or plates attached to the frame 100 between its first and second end 102, 104. In the example of Figure 4D, the reinforcement members 1006, 1008, and 1010 are attached to the first wall 1018, for example. It will be understood that similar reinforcement members may additionally or alternatively also be attached to the second and third walls 1020, 1022.

The additional reinforcement members 1006, 1008, 1010 shown in Figure 4D are reinforcement struts that locally increase the thickness and, therefore, the stiffness of the main frame 1000. Each of the reinforcements members 1006 to 1010 may have a different shape and/or thickness, which generally corresponds to the expected load that will be applied to the respective parts of the main frame 1000 during use of the plough. The reinforcements members 1006, 1008, and 1010 may be permanently or removably connected to the main frame 1000.

In the example of Figure 4D, the reinforcement members 1006, 1008 and 1010 are permanently connected to wall 1018, for example by welding or gluing. Alternatively, the reinforcement members 306, 308 and 310 can be integral to the beam structure; for example they can be cast into the beam. The reinforcement members 1006, 1008, 1010 are arranged around opening 1028 to increase the stiffness of the surrounding area of the first wall 1018, whilst allowing access to the inside of the main frame 1000 via opening 1028. It will be understood that strip or plate-shaped reinforcement members may be used on any of the walls 1018, 1020, 1022 to locally increase the stiffness of the main frame 1000, particularly around access apertures. The reinforcement members 1006, 1008, 1010 may also be used as mounting points for removable covers as described above. Further still, the reinforcement members 1006, 1008, 1010 may be used to connect separate pieces of a side wall, as discussed with reference to Figure 4E, thereby having a dual function.

Another embodiment of the main frame according to the present disclosure is shown in Figure 4E. The main frame 1100 of Figure 4E has a generally identical shape to the main frame 800 shown in Figure 4B. Parts of the main frame 1100 that have an identical function to parts of the main frame 800 are labelled with reference signs increased by 300. In contrast to the main frame 800 of Figure 4B, the main frame 1100 has a first wall 1118 that is made up of individual pieces. In particular, the first wall 1118 comprises a first piece 1106, a second piece 1108, a third piece 1110 and a fourth piece 1112. The first piece 1106 is arranged at the first end 1102 of the main frame 1100. Next and parallel to the first piece 1106 is a second piece 1108, which is also arranged close to the first end 1102 of the main frame 1100. A third piece 1110 is connected to both the first and second piece 1106, 1108. The third piece 1110 is arranged centrally between the first end 1102 and the second end 1104 of the main frame 1100. A fourth piece 1112 is arranged at the second end 1104 of the main frame 1100 and connected to a second end of the third piece 1110. In other words, the third piece 1110 acts as a central piece that connects the first, second and fourth pieces 1106, 1108, 1112.

The individual pieces 1106 to 1112 of the first wall 1118, in this example, are removably connected to each other by means of fastening members 1114. Fastening members 1114 may be attached to connector plates (not shown) arranged on the inside of wall 1118 and spanning the edges between the different pieces 1106 to 1112. In some examples the connector plates can also be used to provide additional stiffness to reinforce specific sections of the main frame, thereby providing a double function. For instance, a connector plate can be dimensioned and positioned such that it at least partially surrounds an opening in a side wall to provide increased stiffness around the opening. As another example, a connection plate may be dimensioned such that it can connect three or more pieces 1106 to 1112 of a side wall. In this way, the connection plate can be big enough such that it provides a significant increase to the stiffness of the main frame in the vicinity of the connection plate.

It will be understood that, in some embodiments, the individual pieces may also be permanently connected to each other.

Of course, the embodiment of Figure 4E is not limited to the number of pieces shown or their respective sizes and shapes. Rather, any subdivision of the wall 1118 into separate pieces may be applied to achieve the stiffness variation across the length of the main frame 1100. Of course, any of the walls 1118, 1120, 1122 of the main frame 1100 may be made up of a plurality of individual pieces that are either removably or permanently connected to each other.

Each of the pieces 1106 to 1112 may act as a removable cover. Accordingly, even without the first opening 1128 and the voids 1124, the pieces 1106 to 1112 may be removed to create apertures in the main frame 1100 for access to the cavity 1001.

Each of the pieces 1106 to 1112 may have a different stiffness so as to vary the stiffness of the main frame 1100 between the first end 1102 and second end 1104. Accordingly, the first and second pieces 1106, 1108 may be stiffer than the third piece 1110, which in turn may be stiffer than the fourth piece 1112. In one example, the stiffness of the individual pieces may be determined by known heat-treatment processes. Other alternatives include provision of pieces with different thickness and/or openings extending through some or all of the pieces.

As with any of the main frames described herein, any of the side walls can include one or more openings. Such a main frame can include one or more external covers (not shown) that are located over one or more of the openings. The external covers can advantageously provide a barrier to debris entering an internal cavity of the main frame. The external covers are not necessarily designed to increase the stiffness of the main frame, although in some examples they could do so. In addition, the external covers can provide a convenient location for including branding of the plough. For instance, the external covers can be removable such that the branding of a plough can be changed simply by changing the external covers. Optionally, the external covers can be made from a material that lends itself to being decorated with a company's brand, such as a plastic.

It will be appreciated that the features described with reference to the above embodiments should not be considered in isolation. Rather, the main frame of the present disclosure may include any combination of features that have been described above. For example, the main frame may have a various different access apertures, including a mixture of voids and openings as described. The apertures provide access form the side of the frame, rather than the front or back end. The apertures may extend partly or fully along the length of the main frame. The frame may also include various reinforcement members and/or duct mounts.

The listing or discussion of an apparently prior-published document in this specification should not necessarily be taken as an acknowledgement that the document is part of the state of the art or is common general knowledge.

Preferences and options for a given aspect, feature or parameter of the disclosure should, unless the context indicates otherwise, be regarded as having been disclosed in combination with any and all preferences and options for all other aspects, features and parameters of the disclosure.

## Claims

1. A main frame (700) for an agricultural implement, the main frame (700) being able to support a plurality of ground engaging tools and extending between a first end (702) that is connectable to an agricultural work vehicle and an opposite, second end (704), wherein the main frame (700) defines at least one cavity (701) extending at least partly between the first and second end of the main frame (700) for accommodating hydraulic and/or electric lines, and wherein the main frame (700) comprises at least one aperture providing access to the cavity from outside of the main frame (700).

2. The main frame (700) of Claim 1, wherein the at least one cavity (701) is for accommodating hydraulic and/or electric lines that extend in a longitudinal dimension of the main frame (700).

3. The main frame (700) of Claim 1 or Claim 2, wherein the at least one aperture provides access for performing maintenance tasks in the at least one cavity from outside of the main frame (700).

4. The main frame (700) of any one of Claims 1 to 3, wherein the at least one aperture extends partly or fully along the length of the main frame (700).

5. The main frame (700) of Claim 4, wherein the at least one aperture extends partly along the length of the main frame (700), e.g.:
vii) less than 75%, 50% or 30% of the length of the main frame,
viii) more than 3%, 5% or 7.5% of the length of the main frame,
ix) between 3% and 30% of the length of the main frame,
x) at least 0.15 metres, 0.2 metres, or 0.4 metres,
xi) less than 2 metres, 1 metre, or 0.5 metres,
xii) between 0.15 metres and 0.4 metres.

6. The main frame (700) of any of Claims 1 to 5, wherein the main frame (700) comprises first and second walls (718, 720) defining parts of the cavity (701), and wherein the at least one aperture is an opening (728) extending through the first or second wall of the main frame (700).

7. The main frame (700) of Claim 6, wherein the opening is arranged at the first end (702) of the main frame (700).

8. The main frame (700) of any of Claims 5 to 6, wherein the main frame (700) comprises a plurality of reinforcement members extending between the first and second walls.

9. The main frame (700) of Claim 8, wherein the reinforcement members extend between opposing side edges of the first and second wall, and the at least one aperture of the main frame is a void between adjacent reinforcement members.

10. The main frame (700) of any of Claims 1 to 9, wherein the main frame (700) comprises at least one removable cover for covering the at least one aperture of the main frame (700).

11. The main frame (700) of any of Claims 1 to 10, wherein the main frame has
an I-shaped cross-section;
a U-shaped cross-section; or
a rectangular cross-section.

12. The main frame (700) of any of Claims 1 to 11, wherein the cavity (701) houses one or more cable or duct mounts.

13. An agricultural implement comprising the main frame (700) of any of Claims 1 to 12 and a plurality of ground engaging tools connected to the main frame (700).

14. An agricultural machinery comprising an agricultural work vehicle and the agricultural implement according to Claim 13.
